# EUROPEAN PATENT APPLICATION

(11) **EP 4 607 970 A1**
(43) Date of publication of application: **27.08.2025**
(21) Application number: 25158994.1
(22) Date of filing: 20.02.2025
(51) Int. Cl.: H04W 4/02, H04W 4/80, H04W 48/18, H04W 88/06

(54) **DATA-COMMUNICATION SYSTEM AND METHOD OF MAKING DATA-COMMUNICATION**

(30) Priority: 26.02.2024 JP 2024026549
(71) Applicant: Cognitive Research Labs, Inc., Tokyo 1060032 (JP)
(72) Inventor: TOMABECHI, Hideto, Tokyo, 1060032 (JP)
(74) Representative: Winter, Brandl - Partnerschaft mbB

(57) **Abstract**

A cellular phone (400) includes a data transmitter/receiver (410) for transmitting/receiving data to/from another party in accordance with a wireless communication system selected among a first to N-th wireless communication systems in dependence on a distance between the cellular phone (400) and the another party, N being an integer equal to or greater than 2, a distance-detecting unit for judging the distance between the cellular phone (400) and the another party, and a memory (422) for storing first to N-th programs for operating the first to N-th wireless communication systems, respectively.

## Description

### BACKGROUND OF THE INVENTION

### FIELD OF THE INVENTION

The invention relates to a computer program to be stored in a portable wireless communication apparatus for making data-communication, a data-communication system employing a portable wireless communication apparatus storing therein the computer program, and a method of making data-communication to be carried out in the data-communication system.

### DESCRIPTION OF THE RELATED ART

In current data communication, main data communication is carried out by means of communication infrastructure such as internet provided by a carrier.

For instance, there are a lot of systems in which BLE (Bluetooth Low Energy) and/or Wi-Fi Direct both mentioned below are(is) alone used.

Communication infrastructure may be damaged with the result that data communication cannot be carried out in natural disaster such as earthquake and typhoon or a war with other countries. However, a system for communication in an such emergency is not presently secured.

### SUMMARY OF THE INVENTION

In view of the above-mentioned present situation, it is an exemplary object of the present invention to provide a computer program for data communication, a data communication system, and a method of making data communication all of which enables to construct a communication network in a short period of time without depending on existing communication infrastructure even in urgent situation such as natural disaster.

In a first exemplary aspect of the present invention, there is provided a computer program to be stored in a portable wireless communication apparatus, the portable wireless communication apparatus including a data transmitter/receiver for transmitting/receiving data to/from another party in accordance with a wireless communication system selected among a first to N-th wireless communication systems in dependence on a distance between the portable wireless communication apparatus and the another party, N being an integer equal to or greater than 2, a distance-detecting apparatus for judging the distance between the portable wireless communication apparatus and the another party, and a memory for storing the computer program and first to N-th programs for operating the first to N-th wireless communication systems, respectively, the computer program selecting a (M+1)-th wireless communication system when the distance detected by the distance-detecting apparatus is greater than a maximum communicable distance of a M-th wireless communication system, but is smaller than a maximum communicable distance of the (M+1)-th wireless communication system, and causing the data transmitter/receiver to transmit/receive data to/from the another party in accordance with the (M+1)-th wireless communication system, M being an integer equal to or greater than 1 and equal to or smaller than (N-1).

It is preferable that the first to N-th wireless communication systems include at least one of BLE (Bluetooth Low Energy), Wi-Fi Direct, WDS (Wireless Distribution System) and UWB (Ultra-Wide Band).

It is preferable that the data transmitted/received by the data transmitter/receiver includes a current position of the portable wireless communication apparatus.

It is preferable that the computer program causes the portable wireless communication apparatus to carry out scanning around the portable wireless communication apparatus to thereby detect another portable wireless communication apparatus existing in a scanned area, calculating an optimal communication path to the another portable wireless communication apparatus, establishing a communication path through which the portable wireless communication apparatus makes communication with the another portable wireless communication apparatus, and serially carrying out the scanning, the calculating and the establishing to thereby construct a mesh network to the another portable wireless communication apparatus.

It is preferable that the computer program causes the portable wireless communication apparatus to further carry out updating the communication path to the another portable wireless communication apparatus for optimization after the mesh network was constructed.

It is preferable that the computer program causes the portable wireless communication apparatus to carry out judging whether data communication is urgent, and preferentially making the data communication if the data communication is judged to be urgent.

In a second exemplary aspect of the present invention, there is provided a cellular phone including a data transmitter/receiver for transmitting/receiving data to/from another party in accordance with a wireless communication system selected among a first to N-th wireless communication systems in dependence on a distance between the cellular phone and the another party, N being an integer equal to or greater than 2, a distance-detecting unit for judging the distance between the cellular phone and the another party, and a memory for storing first to N-th programs for operating the first to N-th wireless communication systems, respectively, the memory further storing the above-mentioned computer program.

In a third exemplary aspect of the present invention, there is provided a data communication system for transmitting/receiving data between portable wireless communication apparatuses, between access points and between a portable wireless communication apparatus and an access point, the portable wireless communication apparatus including a data transmitter/receiver for transmitting/receiving data to/from another party in accordance with a wireless communication system selected among a first to N-th wireless communication systems in dependence on a distance between the portable wireless communication apparatus and the another party, N being an integer equal to or greater than 2, a distance-detecting apparatus for judging the distance between the portable wireless communication apparatus and the another party, and a memory for storing first to N-th programs for operating the first to N-th wireless communication systems, respectively, the data communication system selecting a (M+1)-th wireless communication system when the distance detected by the distance-detecting apparatus is greater than a maximum communicable distance of a M-th wireless communication system, but is smaller than a maximum communicable distance of the (M+1)-th wireless communication system, and causing the data transmitter/receiver to transmit/receive data to/from the another party in accordance with the (M+1)-th wireless communication system, M being an integer equal to or greater than 1 and equal to or smaller than (N-1), the data communication system selecting the (M+1)-th wireless communication system when (a) the distance between the portable wireless communication apparatus and the another party is greater than the greatest distance among maximum communicable distances of the first to N-the wireless communication systems, (b) the portable wireless communication apparatus and the another party are both within the same access point, and (c) the distance between the portable wireless communication apparatus and the access point is greater than a maximum communicable distance of the M-th wireless communication system, but is smaller than a maximum communicable distance of the (M+1)-th wireless communication system, causing the data transmitter/receiver to make a first data-communication in accordance with the (M+1)-th wireless communication system between the portable wireless communication apparatus and the access point, and making a data-communication between the access point and the another party in the same manner as that of the first data-communication, the data communication system making a data-communication between the portable wireless communication apparatus and a first access point in the same manner as that of the first data-communication when the portable wireless communication apparatus is within the first access point, and the another party is within a second access point, making a data-communication between the first access point and the second access point, and making a data-communication between the another party and the second access point in the same manner as that of the first data-communication,

It is preferable that the portable wireless communication apparatus carries out scanning around the portable wireless communication apparatus to thereby detect another portable wireless communication apparatus existing in a scanned area, calculating an optimal communication path to the another portable wireless communication apparatus, establishing a communication path through which the portable wireless communication apparatus makes communication with the another portable wireless communication apparatus, and serially carrying out the scanning, the calculating and the establishing to thereby construct a mesh network to the another portable wireless communication apparatus.

It is preferable that the portable wireless communication apparatus further carries out updating the communication path to the another portable wireless communication apparatus for optimization after the mesh network was constructed.

It is preferable that the portable wireless communication apparatus comprises a cellular phone.

In a fourth exemplary aspect of the present invention, there is provided a method of making data-communication between portable wireless communication apparatuses, between access points and between a portable wireless communication apparatus and an access point, (A) when a distance between a portable wireless communication apparatus and another portable wireless communication apparatus is greater than a maximum communicable distance of a M-th wireless communication system, but is smaller than a maximum communicable distance of the (M+1)-th wireless communication system, M being an integer equal to or greater than 1 and equal to or smaller than (N-1), N being an integer equal to or greater than 2, the method including selecting the (M+1)-th wireless communication system, and making a data-communication with the another portable wireless communication apparatus in accordance with the (M+1)-th wireless communication system, (B) when (a) the distance between the portable wireless communication apparatus and the another portable wireless communication apparatus is greater than the greatest distance among maximum communicable distances of the first to N-the wireless communication systems, (b) the portable wireless communication apparatus and the another party are both within the same access point, and (c) the distance between the portable wireless communication apparatus and the access point is greater than a maximum communicable distance of the M-th wireless communication system, but is smaller than a maximum communicable distance of the (M+1)-th wireless communication system, the method including selecting the (M+1)-th wireless communication system, making a first data-communication in accordance with the (M+1)-th wireless communication system between the portable wireless communication apparatus and the access point, and making a data-communication between the access point and the another portable wireless communication apparatus in the same manner as that of the first data-communication, (C) when the portable wireless communication apparatus is within a first access point, and the another portable wireless communication apparatus is within a second access point, the method including making a data-communication between the portable wireless communication apparatus and a first access point in the same manner as that of the first data-communication, making a data-communication between the first access point and the second access point, and making a data-communication between the another portable wireless communication apparatus and the second access point in the same manner as that of the first data-communication.

It is preferable that the method further includes scanning around the portable wireless communication apparatus to thereby detect another portable wireless communication apparatus existing in a scanned area, calculating an optimal communication path to the another portable wireless communication apparatus, establishing a communication path through which the portable wireless communication apparatus makes communication with the another portable wireless communication apparatus, and serially carrying out the scanning, the calculating and the establishing to thereby construct a mesh network to the another portable wireless communication apparatus.

It is preferable that the method further includes updating the communication path to the another portable wireless communication apparatus for optimization after the mesh network was constructed.

It is preferable that the method further includes judging whether data communication is urgent, and preferentially making the data communication if the data communication is judged to be urgent.

### ADVANTAGES OBTAINED BY THE INVENTION

The computer program, the data communication system and the method all in accordance with the present invention provide the following advantages.
(A) Even when existing communication infrastructure (internet) is damaged in disasters resulting in functional incompetence, it would be possible to construct an autonomous network independently of existing communication infrastructure, ensuring that a situation of communication being impossible, which often occurs in disasters, can be dissolved. Consequently, victims of disasters can smoothly share or exchange information with one another, and further, communication can be effectively made between victims and a rescue team.
(B) It is possible for victims of disasters to newly construct a network only by means of their portable wireless communication devices such as cellular phones without preparing extraordinary equipment, ensuring it possible to confront unexpectedly occurring natural disasters.
(C) It is possible to obtain positional information of himself/herself without depending on GPS. For instance, since a GPS satellite is first destroyed in a war, it is quite helpful to get positional information of himself/herself without depending on GPS.

### BRIEF DESCRIPTION OF THE DRAWINGS

FIG. 1 is a block diagram illustrating an example of a structure of a cellular phone storing therein a computer program for data communication in accordance with the first exemplary embodiment of the present invention.
FIG. 2 is a flowchart showing the operation of the cellular phone illustrated in FIG. 1.
FIG. 3 is a schematic view illustrating a first situation of communication to be made between two cellular phones.
FIG. 4 is a schematic view illustrating a second situation of communication to be made between two cellular phones.
FIG. 5 is a schematic view illustrating a third situation of communication to be made between two cellular phones.
FIG. 6 is a flowchart of an example of a method of constructing a mesh network.
FIGs. 7A to 7C are schematic views showing a process of constructing a mesh network.
FIG. 8 is a conceptual view showing cooperation of internet with a mesh network in accordance with the second exemplary embodiment of the present invention.

### DESCRIPTION OF THE EXEMPLARY EMBODIMENTS

Exemplary embodiments in accordance with the present invention will be explained hereinbelow with reference to drawings.

### (First Exemplary Embodiment)

The first exemplary embodiment relates to a computer program for data communication to be stored in a portable wireless communication apparatus.

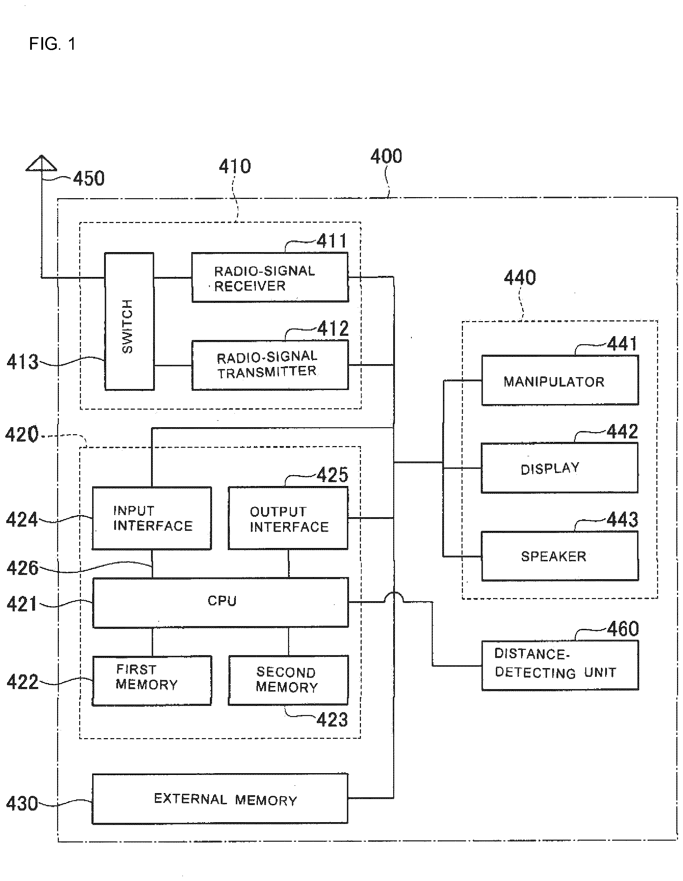

A typical example of a portable wireless communication apparatus is a cellular phone. FIG. 1 is a block diagram illustrating an exemplary structure of a cellular phone 400 storing therein a computer program for data communication in accordance with the first exemplary embodiment.

A cellular phone 400 is designed to include a communication unit 410, a control unit 420, an external memory 430, an input-output (IO) unit 440, an antenna 450, a distance-detecting unit 460 adapted to judge a distance between the cellular phone 400 and other party with which the cellular phone 400 makes communication, and a buttery (not illustrated) providing electric power to those units, for instance.

The communication unit 410 is connected to the antenna 450, and transmits data to and receives data from other cellular phones or other portable wireless communication apparatuses in radio-signal communication.

The communication unit 410 includes a radio-signal receiver 411, a radio-signal transmitter 412, and a switch 413.

The radio-signal receiver 411 demodulates data received from another cellular phone, and then, transmits the thus demodulated data to the control unit 420. The radio-signal transmitter 412 modulates data output from the control unit 420, and then, transmits the thus modulated data to another cellular phone through the antenna 450. The switch 413 receives a signal output from the control unit 420, and exchanges a transmission mode to a receipt mode and vice versa in accordance with the received signal.

As illustrated in FIG. 1, the control unit 420 is comprised of a central processing unit (CPU) 421, a first memory 422 comprised of a read only memory (ROM), a second memory 423 comprised of a random access memory (RAM), an input interface 424 through which commands and/or data having been input into the control unit 420 are transmitted to the central processing unit 421, an output interface 425 through which a result of actions having been executed by the central processing unit 421 is output, and buses 426 through which the central processing unit 421 is electrically connected with the first memory 422, the second memory 423, the input interface 424, and the output interface 425.

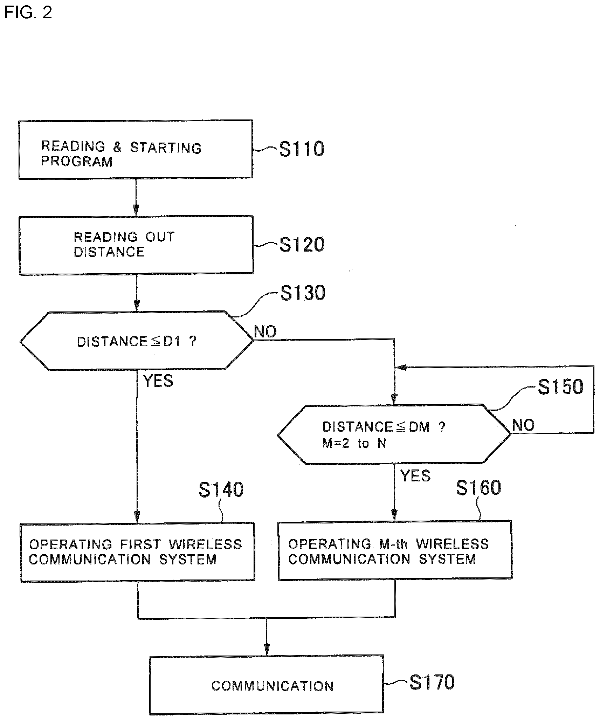

The first memory 422 stores therein both a program for causing the central processing unit 421 to execute the steps explained later with reference to FIG. 2, and unrewritable data.

Such a program may be presented through a non-transitory storage medium readable by a computer.

In the specification, the term "storage medium" means any medium which can store or record data or programs therein. The term "storage medium" includes, for instance, a disk-shaped recorder such as CD-ROM (Compact Disk-ROM) or PD, a magnetic tape, MO (Magneto Optical Disk), DVD-ROM (Digital Video Disk-Read Only Memory), DVD-RAM (Digital Video Disk-Random Access Memory), a floppy disk, a memory chip such as RAM (Random Access Memory) or ROM (Read Only Memory), EPROM (Erasable Programmable Read Only Memory), EEPROM (Electrically Erasable Programmable Read Only Memory), smart media (Registered Trade Mark), a flush memory, a rewritable card-type ROM such as a compact flush card, a hard disk , and any other suitable means for storing a program therein.

A storage medium storing a program causing the control unit 420 to execute the later-mentioned steps shown in FIG. 2 may be accomplished by programming functions of those steps with a programming language readable by a computer, and recording the program in a storage medium such as the above-mentioned ones.

A hard disc equipped in a server may be employed as a storage medium. It is also possible to accomplish the storage medium in accordance with the present invention by storing the above-mentioned computer program in such a storage medium as mentioned above, and reading the computer program by other computers through a network.

The second memory 423 stores therein various data and parameters, and presents a working area to the central processing unit 421. That is, the second memory 423 stores data temporarily necessary for the central processing unit 421 to execute the program.

The central processing unit 421 reads the program out of the first memory 422, and executes the program. Thus, the central processing unit 421 operates in accordance with the program stored in the first memory 422. In the present exemplary embodiment, the first memory 422 stores therein a program for executing the process shown in FIG. 2. The central processing unit 421 executes the steps shown in FIG. 2 in accordance with the program.

The IO unit 440 includes a manipulation device 441, a display 442, and a speaker 443.

The manipulation unit 441 is comprised of a ten-key pad, for instance. Various data is input into the cellular phone 400 through the manipulation unit 441.

The display 442 is comprised of a liquid crystal display (LCD), for instance. The display 442 displays computation results carried out by the control unit 420 as well as various data.

Audio data received from another cellular phone is output through the speaker 443.

The external memory 430 works for the control unit 420. Computation results carried out by the control unit 420, and various data are stored in the external memory 430.

The distance-detecting unit 460 detects a distance between the cellular phone 400 and other cellular phone in the following manner, for instance.

The distance-detecting unit 460 measures a distance between the cellular phone 400 and other cellular phones located around the cellular phone by means of Bluetooth, for instance.

Specifically, Bluetooth carries out steps of measuring an intense of a signal having been transmitted from other cellular phones, and guessing a relative distance between the cellular phone 400 and other cellular phones in accordance with a signal-intense indicator such as RSSI (Received Signal Strength Indicator).

The central processing unit 421 selects one of first to N-th wireless communication systems in accordance with the distance detected by the distance-detecting unit 460, and make data communication in accordance with the thus selected wireless communication system. Herein, N is an integer equal to or greater than 2.

FIG. 2 is a flowchart showing the steps to be carried out by the cellular phone 400. Hereinbelow is explained an operation carried out by the cellular phone 400, with reference to FIGs. 1 and 2.

The central processing unit 421 reads a program for data communication out of the first memory 422, and starts the program (step S110).

For instance, Bluetooth and Wi-Fi are one of wireless communication systems. They are different from each other with respect to a communicable distance, a maximum communicable amount of data and electric power consumption in dependence of standards. Tabel 1 shows each specification of Bluetooth and Wi-Fi in each of standards.

**(Table 1)**

| | Standard | Communicable Distance | Maximum communicable amount of data | Electric power consumption |
|---|---|---|---|---|
| Bluetooth | Basic PHY | 1m - 10m | 1Mbps - 12Mbps | Low (1mA - 10mA) |
| Bluetooth | LE Coded PHY | 10m - 100m | 2Mbps-24Mbps | Low (1mA - 5mA) |
| Wi-Fi | 802.11b | about 100m | 11Mbps | Low (10mA - 20mA) |
| Wi-Fi | 802.11g | about 200m | 54Mbps | Middle (10mA - 20mA) |
| Wi-Fi | 802.11n | about 200m | 600Mbps | Middle (20mA - 30mA) |
| Wi-Fi | 802.11ac | about 300m | 1.3Gbps | Middle (20mA - 50mA) |
| Wi-Fi | 802.11ax | about 500m | 9.6Gbps | Middle (20mA - 50mA) |

The first memory 422 stores therein first to N-th programs causing the cellular phone 400 to execute first to N-th wireless communication systems, respectively. The first to N-th wireless communication systems are selected among various wireless communication systems including Bluetooth and Wi-Fi such that a maximum communicable distance becomes smaller in them.

Table 2 shows a maximum communicable distance in the first to N-th wireless communication systems.

**(Table 2)**

| System Number | Maximum communicable distance |
|---|---|
| 1 | D1 |
| 2 | D2 |
| 3 | D3 |
| 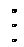 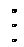 | ⋮ |
| N | DN |

In Table 2, a maximum communicable distance becomes greater towards DN from D1, that is, D1 is smallest and DN is greatest (D1<D2<D3<· · · <DN)
The central processing unit 421 reads out a distance between the cellular phone 400 and other cellular phone(s), having been detected by the distance-detecting unit 460 and stored in the first memory 422 (step S120).

Then, the central processing unit 421 judges whether the thus read-out distance is equal to or smaller than a minimum communicable distance among the maximum communicable distances of the first to N-th wireless communication systems, that is, a distance D1 of the first wireless communication system (step S130).

If the read-out distance is equal to or smaller than the distance D1 (YES in step S130), the central processing unit 421 reads the first program out of the first memory 422, and then, executes the first program. Thus, the first wireless communication system is operated (step S140), and accordingly, the cellular phone 400 is into the condition of being able to make communication with another cellular phone (step S170).

If the read-out distance is greater than the distance D1 (NO in step S130), the central processing unit 421 judges whether the read-out distance is equal to or smaller than a second minimum communicable distance among the maximum communicable distances of the first to N-th wireless communication systems, that is, a distance D2 of the second wireless communication system (step S150).

If the read-out distance is equal to or smaller than the distance D2 (YES in step S150), the central processing unit 421 reads the second program out of the first memory 422, and then, executes the second program. Thus, the second wireless communication system is operated (step S160), and accordingly, the cellular phone 400 is into the condition of being able to make communication with another cellular phone (step S170).

If the read-out distance is greater than the distance D2 (NO in step S150), the central processing unit 421 judges whether the read-out distance is equal to or smaller than a third minimum communicable distance among the maximum communicable distances of the first to N-th wireless communication systems, that is, a distance D3 of the third wireless communication system (step S150).

The central processing unit 421 repeatedly judges whether the read-out distance is equal to or smaller than a distance DM (M=2, 3, · · · , N) (step S150) to thereby find a wireless communication system providing a maximum communicable distance longer than the read-out distance, and executes the thus found wireless communication system (step S160) to thereby allow the cellular phone 400 to make communication with another cellular phone (step S170).

As having been explained so far, the program for data communication in accordance with the first exemplary embodiment enables to construct a network through which the cellular phone 400 can make communication with another cellular phone independently of an existing communication infrastructure, even when an existing communication infrastructure such as internet does not work.

In addition, a network for the cellular phone 400 to make communication with another cellular phone is constructed automatically in dependence on a distance between the cellular phone 400 and another cellular phone, and hence, the cellular phone 400 can make communication (P2P communication) with another cellular phone without carrying out complicated setting.

The program for data communication in accordance with the first exemplary embodiment makes it possible to make data communication even when an existing communication infrastructure is damaged due to natural disaster, for instance, ensuring much contribution to actions to be made in urgent situation such as ascertainment of someone's safety and communication with a rescue team.

The distance-detecting unit 460 in the first exemplary embodiment is designed to detect a distance between the cellular phone 400 and other cellular phones located around the cellular phone 400 by means of Bluetooth, but may be designed to do the same in other ways.

Since an intensity of a signal transmitted in response from another cellular phone is variable in dependence on environments at that time, it is sometimes difficult to enhance an accuracy with which a distance between the cellular phone 400 and another cellular phone is measured or with which a position of another cellular phone is detected.

In order to enhance such an accuracy, UWB (Ultra-Wide Band) may be employed, for instance.

In UWB, a pulse having a very short time base is used for measuring a distance between devices with high accuracy. In conventional wireless communication, signals are serially radiated. In contrast, UWB uses a short pulse unlike conventional wireless communication, it is possible to measure a distance between the cellular phone 400 and another cellular phone at a particular timing.

Specifically, in UWB, a short pulse signal having been transmitted from another cellular phone is caught, and a distance between the cellular phone 400 and another cellular phone is calculated based on ToA (Time of Arrival) and/or ToF (Time of Flight).

The distance-detecting unit 460 may adopt other techniques for measuring the distance.

For instance, the distance may be calculated by identifying a position of another cellular phone by means of a GPS satellite, and calculating the distance based on the identified position. A GPS satellite is quite useful for identifying outside a position of another cellular phone.

As an alternative, it may be possible to identify a position of another cellular phone by virtue of position information provided by nearby Wi-Fi network. Since a GPS signal is weak in strength indoors, it is possible to utilize Wi-Fi to thereby enhance an accuracy with which a position is identified indoors.

It is also possible to accurately identify a position of another cellular phone in a short distance by virtue of beacon technique in which BLE (Bluetooth Low Energy) is used.

It is possible to enhance an accuracy with which a position is identified or a distance is measured in various environments by employing the above-mentioned techniques alone or in combination. For instance, in an environment in which Wi-Fi and/or Bluetooth are(is) available, it is possible to identify a position or measure a distance with high accuracy regardless of outdoors or indoors by using GPS in combination with Wi-Fi and/or Bluetooth.

### (Second Exemplary Embodiment)

The computer program in accordance with the first exemplary embodiment enables cellular phones to make wireless communication (P2P communication) to each other. However, in the case that another cellular phone is located too far away from the cellular phone 400, even a plurality of wireless communication systems equipped in the cellular phone 400 cannot cover an area in which another cellular phone is located.

The computer program in accordance with the second exemplary embodiment deals with such a problem.

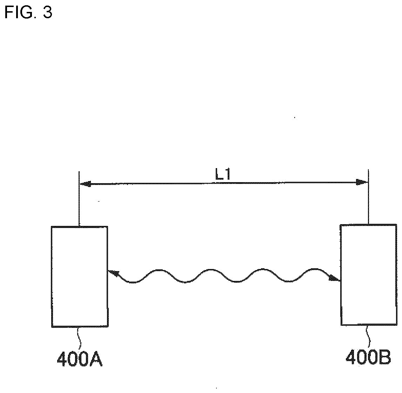

FIG. 3 is a schematic view illustrating a first situation of communication to be made between two cellular phones 400A and 400B.

It is supposed that the cellular phones 400A and 400B are located away from each other by a distance L1. If the distance L1 is equal to or smaller than a maximum communicable distance (DN in the first exemplary embodiment) among communicable distances of wireless communication systems equipped in each of the cellular phones 400A and 400B, the cellular phones 400A and 400B can make communication (P2P communication) with each other similarly to the first exemplary communication. The wireless communication system for P2P communication may be comprised of BLE (Bluetooth Low Energy ^{®}), for instance.

Bluetooth has two standards in which a conventional standard is called Bluetooth Classic, and BLE (Bluetooth Low Energy ^{®}) is a standard specialized for saving electric power.

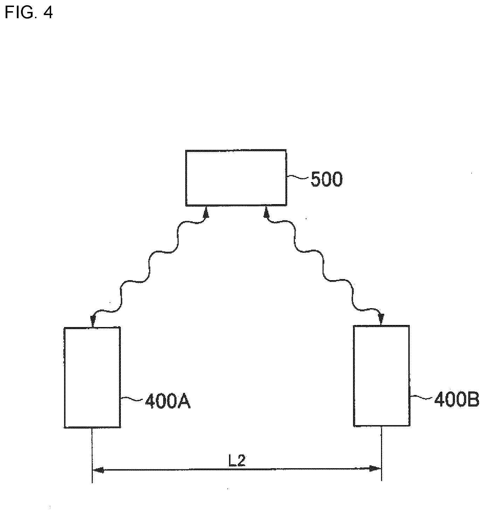

FIG. 4 is a schematic view illustrating a second situation of communication to be made between the two cellular phones 400A and 400B.

In the second situation illustrated in FIG. 4, it is supposed that the cellular phones 400A and 400B are located away from each other by a distance L2, and the two cellular phones 400A and 400B are both located within an area in which a common access point 500 can make communication. It is further supposed that the distance L2 is greater than a maximum communicable distance (DN in the first exemplary embodiment) among communicable distances of wireless communication systems equipped in each of the cellular phones 400A and 400B. Accordingly, the cellular phones 400A and 400B cannot make communication with each other unlike the first exemplary communication. However, each of the cellular phones 400A and 400B can make communication with the access point 500 in the same way as the first exemplary embodiment.

The cellular phone 400A makes communication with the access point 500 similarly to the first exemplary embodiment, for instance, in accordance with Wi-Fi Direct ^{®}).

The cellular phone 400B also makes communication with the access point 500 similarly to the first exemplary embodiment, for instance, in accordance with Wi-Fi Direct ^{®}).

Herein, Wi-Fi Direct ^{®} is a communication system in accordance with which two communication devices can make communication with each other without using a wireless LAN router.

Since the access point 500 works as a relay station, even if the distance L2 makes the cellular phones 400A and 400B unable to make communication with each other in accordance with the first exemplary embodiment, it is possible to construct a network between the cellular phones 400A and 400B.

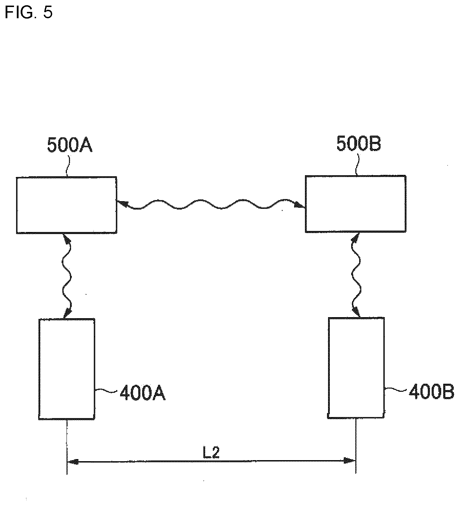

FIG. 5 is a schematic view illustrating a third situation of communication to be made between the two cellular phones 400A and 400B.

It is supposed that the cellular phones 400A and 400B are located away from each other by the distance L2, similarly to FIG. 4, and further that the cellular phone 400A is located within an area in which a first access point 500A can make communication and the cellular phone 400B is located within an area in which a second access point 500B can make communication unlike FIG. 4. Though the cellular phones 400A and 400B cannot make communication with each other in accordance with the first exemplary embodiment, the cellular phones 400A and 400B can make communication with the first and second access points 500A and 500B, respectively, in accordance with the first exemplary embodiment.

The cellular phone 400A makes communication with the first access point 500A in accordance with the first exemplary embodiment, for instance, in accordance with Wi-Fi Direct ^{®}. Similarly, the cellular phone 400B makes communication with the second access point 500B in accordance with the first exemplary embodiment, for instance, in accordance with Wi-Fi Direct ^{®}.

The first and second access points 500A and 500B make communication with each other in accordance with a long-distance wireless communication system, for instance, WDS (Wireless Distribution System).

Herein, WDS (Wireless Distribution System) is a communication system in which access points (AP) of wireless LAN (Wi-Fi) are connected to each other through radio signals to thereby allow devices to make wireless communication to each other.

As mentioned above, even if the two cellular phones 400A and 400B are located far away from each other and they are not located within a common access point communication area, they can make communication with each other through the two access points 500A and 500B.

The computer program in accordance with the present exemplary embodiment makes it possible to select an optimal wireless communication system in dependence on a distance between the two cellular phones 400A and 400B, and further on whether they are located within a common access point area, to thereby construct a network without depending on an existing infrastructure.

In the first and second exemplary embodiments, the cellular phone 400 may be designed to additionally include a switch by which the computer program for data communication is turned on or off. By turning the switch on after the computer program for data communication is installed in the cellular phone 400, a communication starts to be made with another cellular phone without particular action to be made by a user of the cellular phone 400.

Since it is assumed that the functions of the computer program in accordance with the first and second exemplary embodiments are installed in the cellular phone 400, data communication is to be limited to data stored in the cellular phone 400. In contrast, if the functions of the computer program are installed in OS (Operating System) of the cellular phone 400, it is possible to transmit all of data existing on OS.

In the communication to be made in accordance with the first and second exemplary embodiments, it is possible to allow the cellular phone 400 to make communication with a limited group of cellular phones in order to enhance a security level. For instance, the cellular phone 400 may be allowed to make communication only with accounts of user's acquaintance or a group (for instance, a company) to which a user of the cellular phone 400 belongs.

The cellular phone 400 storing therein the computer program in accordance with the first and second exemplary embodiments may be used in various situations as follows.

It is possible in disasters to make communication with persons located around the cellular phone 400 to thereby share information and cooperate with each other without connecting an existing infrastructure (internet). In particular, since a communication can be made with a nearby rescue team, valuable lifeline can be presented in an emergency.

In addition, since the cellular phone 400 can make communication simultaneously with a plurality of other cellular phones, a communication network can be constructed swiftly and broadly in disasters.

For instance, in outdoor activities such as mountain climbing and camping, a user of the cellular phone 400 may enter an area in which radio signals cannot reach the cellular phone 400 through an existing communication infrastructure (internet). In such a situation, the cellular phone 400 makes it possible to make communication with persons located in an area in which the communication in accordance with the first and second exemplary embodiments can be made, and share information to avoid distress or request to help a user of the cellular phone 400.

It is also possible to construct an independent network when workers are located far away from one another in a large construction site or a large farm in an area in which an existing communication infrastructure is not built.

Furthermore, the computer program in accordance with the first and second exemplary embodiments is applicable to communication to be made between mobiles running on the ground such as an automobile, flying objects such as a drone, and/or industrial robots.

### (Third Exemplary Embodiment)

In the above-mentioned first and second exemplary embodiments, interactive communication to be made between two cellular phones was exemplified. In contrast, a communication may be serially radially extended in a single direction from a single cellular phone. For instance, a mesh network may be constructed by serially linking a plurality of cellular phones with one another to thereby serially repeat data transmission to a single cellular phone or a plurality of cellular phones from a single cellular phone, thus diffusing data to a lot of cellular phones.

In general, since an existing mesh network is dependent on a fixed network topology, the existing mesh network has a limited communication capacity in a high-density environment, resulting in reduction in both reliability of a network and a communication speed. Thus, the present exemplary embodiment presents a mesh network enabling effective data sharing by employing a dynamic network topology to thereby optimize reliability to a network and a communication speed. In the third exemplary embodiment, each of portable wireless communication apparatuses (for instance, a cellular phone) automatically selects a route in which data is transmitted, and updates a route, if necessary. It is possible to construct an optimal data-transmission route in real-time in dependence on behavior of each of portable wireless communication apparatuses and/or variation of network environment.

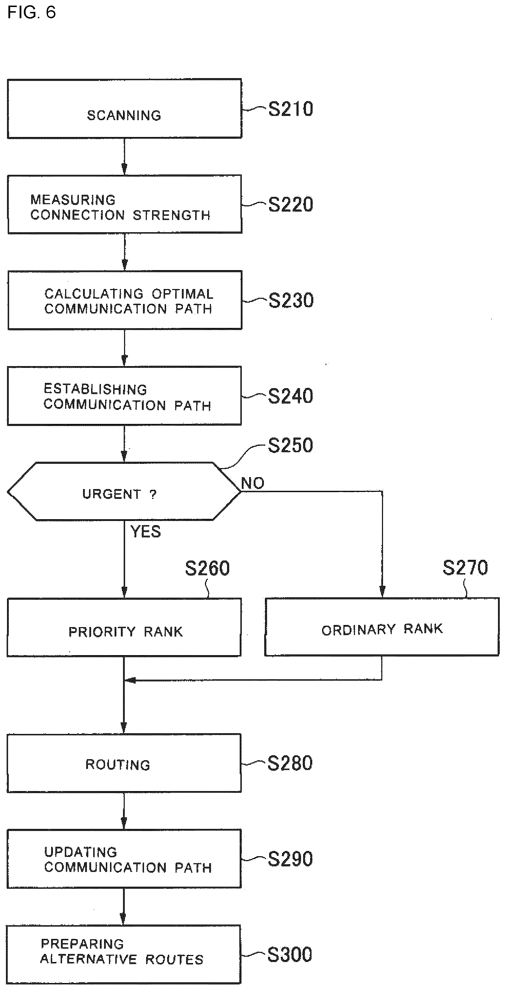

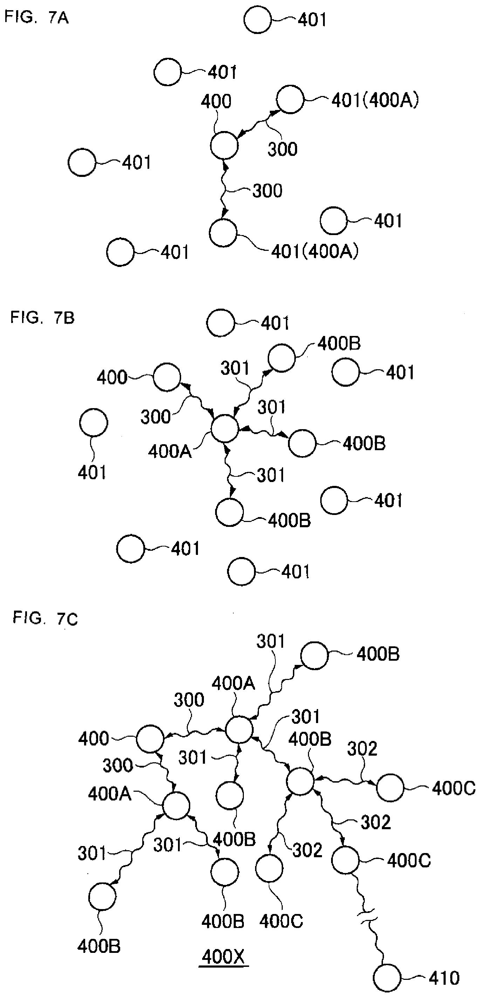

FIG. 6 is a flowchart of an example of a method of constructing a mesh network, and FIGs. 7A to 7C are schematic views showing a process of constructing a mesh network. An example of a method of constructing a mesh network is explained hereinbelow with reference to FIGs. 6 and 7A to 7C.

As illustrated in FIG. 7A, it is supposed that a plurality of cellular phones 401 is located around the cellular phone 400.

The cellular phone 400 detects the cellular phone(s) 401 located therearound in the following manner.

For instance, the cellular phone 400 periodically scans an area therearound (step S210) to thereby detect the cellular phone(s) 401 newly entering the scanned area. Furthermore, the cellular phone 400 measures a connection strength with the newly detected cellular phone(s) 401 (step S220).

The cellular phone 400 also acquires relative positional information of the newly detected cellular phone(s) 401 by means of a communication system called UWB (Ultra-Wide Band).

Then, the cellular phone 400 calculates an communication path optimal to make communication with the cellular phone(s) 401, in accordance with the connection strength and an amount of transmitted/received data (step S230).

Specifically, the control unit 420 in the cellular phone 400 analyzes quality of connection (for instance, an intensity, stability and so on) and present needs for data transmission, and dynamically selects a most effective data transmission path in accordance with the analyzed results. That is, the control unit 420 selects, among a plurality of the cellular phones 401 located around the cellular phone 400, a single cellular phone 400A or a plurality of cellular phones 400A to which data can be transmitted most effectively, and makes a communication path (P2P connection) 300 to the cellular phone(s) 400A in accordance with the first and second exemplary embodiments (step S240).

As illustrated in FIG. 7B, each of the cellular phones 400A (only the single cellular phone 400A is illustrated in FIG. 7B) having established a communication path with the cellular phone 400 carries out the above-mentioned steps S210 to S230 to thereby establish a communication path 301 with a single cellular phone 400B or a plurality of cellular phones 400B (step S240).

As illustrated in FIG. 7C, each of the cellular phones 400B similarly establishes a communication path 302 with a single cellular phone 400C or a plurality of cellular phones 400C (step S240).

As mentioned above, each of the cellular phones which has already established a communication path with other cellular phone(s) further establishes a communication path with a single cellular phone or a plurality of cellular phones (step S240). Thus, there is established a mesh network 400X starting from the cellular phone 400. The cellular phone 400 can make a communication path or communication paths through the thus established mesh network 400X with a single cellular phone 410 or a plurality of cellular phones 410 located far away from the cellular phone 400.

Each of the cellular phones 400, 400A, 400B and 400C judges whether a communication to be made now is urgent or not (step S250).

For instance, rescue request and medical communication are judged to be urgent (YES in step S250), and data packets for those communication are given a priority (step S260).

Judgment as to whether communication to be made now is urgent or not is made by a user of the cellular phone 400.

For instance, the cellular phone 400 is designed to include an urgency button. A user of the cellular phone 400 pushes the urgency button to indicate a communication to be made now urgent. As an alternative, a user of the cellular phone 400 may click an urgency icon displayed in a user interface to do the same.

In the case that official authority such as a fireman, a first-aid person or a policeman judges a communication to be made now urgent, all communications made by them may be set urgent.

If a communication to be made now is judged not urgent (NO in step S250), the communication is given an ordinary rank lower than the above-mentioned priority (step S270).

Then, taking limited source such as a lifetime of a battery and a bandwidth into consideration, a routing is carried out in each of the cellular phones (step S280).

In particular, a frequency at which the cellular phones 400, 400A, 400B and 400C having low residual power in a battery are used as a relay point is minimized in order to minimize influence to the cellular phones inactive at night.

After a routing has been carried out (step S280), a condition of a network is caused to vary due to mobility of the cellular phones and/or environment therearound (for instance, a weather). Thus, each of the cellular phones re-estimates available options for connection, and updates a communication path to optimize a communication route (step S290).

If an optimal communication route is newly found during updating a communication path, a communication path is entirely reconstructed to include the newly found communication route. By updating a communication path, a network is always kept optimal, ensuring highly reliable communication.

Because of variation of a network density and/or mobility of the cellular phones, a trouble may happen in an already constructed communication path. Thus, a plurality of alternative routes is prepared in advance for important communication paths (step S300). If a trouble happens in a communication path now in use, a communication route in failure is changed to an alternative route to thereby reduce a risk of a single-point obstacle.

In the above-mentioned mesh network, even if a particular cellular phone goes wrong for its own reasons, other cellular phones recalculate (reconstruct) an optimal communication path without the wrong cellular phone. That is, even if a single cellular phone or a plurality of cellular phones defining the mesh network goes wrong, a communication in the mesh network can be kept available.

A cellular phone may belong to a plurality of mesh networks independent from one another. Accordingly, In the case that a cellular phone belongs to a plurality of mesh networks, a user of the cellular phone can share information at real-time in a medical team or can utilize the cellular phone in arrangement of rescue activity in medical support in a remote area.

The above-mentioned mesh network can work by itself, but can cooperate with other systems.

For instance, a network (internet) in a disaster area may be entirely or partially in an off-line condition. That is, it is supposed that a user of a cellular phone can connect to an internet in a part of a damaged area, in which case, the above-mentioned mesh network may be used in cooperation with an internet to thereby allow a lot of victims to make communication with one another and/or share information about a disaster.

As illustrated in FIG. 7C, each of the cellular phones 400, 400A, 400B and 400C is connected to a single or a plurality of cellular phone(s) in the mesh network, in which data is transmitted from the cellular phone 400 as a starting phone to a cellular phone 410 located far away from the cellular phone 400, through the cellular phones 400A, 400B and 400C.

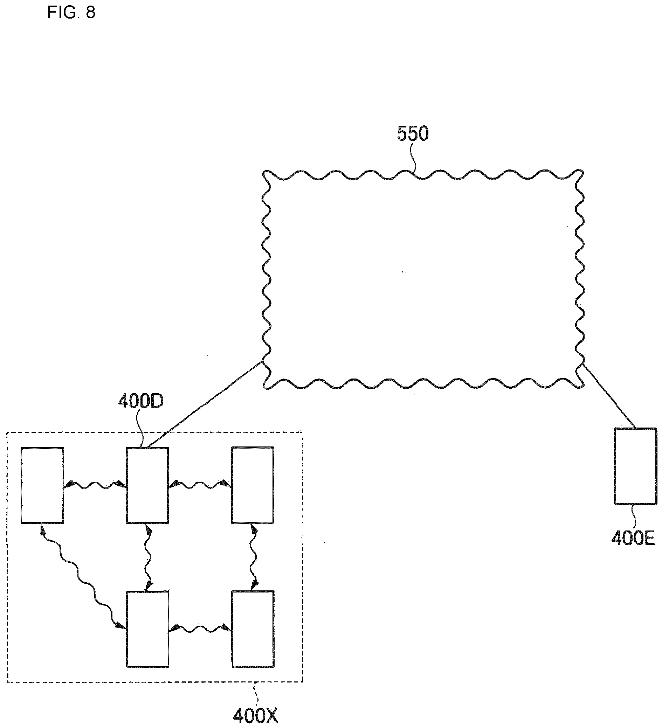

FIG. 8 is a schematic conceptional view showing cooperation of the mesh network with an internet.

Since internet is available in a partial area, a cellular phone 400D, one of cellular phones defining a mesh network X, is communicable to internet 550. Another cellular phone 400E not defining the mesh network 400X is also communicable to the internet 550.

As mentioned above, if internet is locally available, the cellular phone 400D and thus the mesh network 400X is able to make communication with the cellular phone 400E through the internet 550.

For instance, in the case that the cellular phone 400D (the mesh network 400X) is situated in a physically isolated damaged area and the cellular phone 400E is situated in a non-damaged area such as an inter-city area located away from a damaged area, even if it is impossible to extend the mesh network 400X to the cellular phone 400E, it is possible to allow a damaged area to make communication with a non-damaged area by extending the mesh network 400X to a location communicable to internet (a location of the cellular phone 400D), and using the internet 550 locally available, ensuring smooth transmission of disaster information and immediate request of rescue.

In the present exemplary embodiment, judgment as to whether a communication to be made now is urgent or not is made by a user of the cellular phone 400 or made by judging whether a user of the cellular phone 400 is an official authority. As an alternative, an urgent mode in which judgment as to whether a communication to be made now is urgent or not is automatically made may be installed into the cellular phone 400.
(A) For instance, a present location of the cellular phone 400 is grasped through the distance-detecting unit 460 by means of UWB and so on. In the case that the thus grasped present location is in an area in which a disaster warning is announced at that time, communication transmitted from the cellular phone 400 is all set urgent. It is thus possible to set the cellular phone 400 in an urgent mode at real-time by utilizing official information.
(B) For instance, the cellular phone 400 may be designed to include a device such as an acceleration sensor or a gyro sensor for detecting physical motion of itself. In the case that the device detects oscillation derived from natural disaster such as earthquake and the thus detected oscillation is over a predetermined threshold, an urgent mode is automatically set active in the cellular phone 400.
(C) Audio data collected through a microphone of the cellular phone 400 is analyzed, and in the case that the analyzed audio data is characteristic of urgent situation, such as warning siren, sound uttered when a building is fallen down, or scream of a lot of people, an urgent mode is automatically set active in the cellular phone 400.
(D) In the case that urgent news is received at real-time through internet or API, an urgent mode is automatically set active in the cellular phone 400.

The above-mentioned means (A) to (D) may be used alone or in combination.

A program for setting the cellular phone 400 into an urgent mode is stored in the first memory 422 as a part of the data-communication program in accordance with the first exemplary embodiment, for instance. When the data-communication program is caused to start, the program for setting the cellular phone 400 into an urgent mode is also caused to start.

### (Fourth Exemplary Embodiment)

In the above-mentioned second and third exemplary embodiments, Bluetooth Low Energy (BLE^{®}), Wi-Fi Direct ^{®} and Wireless Distribution System (WDS) are exemplified as examples of a radio-signal communication system. Apart from those radio-signal communication systems, Ultra-Wide Band (UWB) mentioned earlier may be used.

Wireless communication using UWB is characterized by high accuracy with which a location is identified or a distance is measured. For instance, UWB wireless communication is used in a smartphone or a smart key of a high-quality car for preventing loss or theft (for instance, UWB wireless communication is installed in iPhone ^{®} 11 model and later models).

The cellular phone 400 in accordance with the fourth exemplary embodiment is designed to include a program stored in the first memory 422 for carrying out UWB wireless communication, and further include Global Positioning System (GPS).

Highly accurate positional information can be shared at real-time through a combination of GPS and UWB. In particular, a rescue team can rapidly identify location of victims in disaster. Furthermore, a lot of persons can share their positional information in daily life.

When data is transmitted from the cellular phone 400 storing therein a program used for carrying out UWB wireless communication, to another cellular phone, information indicative of a position of the cellular phone 400 is transmitted to another cellular phone together with data.

Since UWB makes it possible to accurately measure a distance between two cellular phones and identify a direction in which another cellular phone is located, it is possible to precisely identify a position of the cellular phone 400 with an error in the order of a few centimeters. Furthermore, since UWB scarcely interferes with other radio-signals, it is possible to provide highly accurate positional information indoors or even in an environment in which a GPS signal is weak.

By utilizing UWB having such a character as mentioned above, it is possible to establish interactive communication between a rescue team and victims in a disaster, ensuring that instructions for refuge are surely transmitted, a SOS signal is immediately received from victims, and important positional information is shared at real-time.

For instance, in the case that distress happens in a heart of mountain in which radio-signals for a cellular phone cannot arrive, since a position measured by UWB has an accuracy higher than the same measured by GPS, it is possible to shorten a period of time for rescue, if a victim and a rescue team both can use UWB wireless communication.

## Claims

1. A computer program to be stored in a portable wireless communication apparatus (400),
the portable wireless communication apparatus (400) including:
a data transmitter/receiver (410) for transmitting/receiving data to/from another party in accordance with a wireless communication system selected among a first to N-th wireless communication systems in dependence on a distance between the portable wireless communication apparatus (400) and the another party, N being an integer equal to or greater than 2;
a distance-detecting apparatus (460) for judging the distance between the portable wireless communication apparatus (400) and the another party; and
a memory (422) for storing the computer program and first to N-th programs for operating the first to N-th wireless communication systems, respectively,
the computer program adapted to perform selecting a (M+1)-th wireless communication system when the distance detected by the distance-detecting apparatus (460) is greater than a maximum communicable distance of a M-th wireless communication system, but is smaller than a maximum communicable distance of the (M+1)-th wireless communication system, and causing the data transmitter/receiver (410) to transmit/receive data to/from the another party in accordance with the (M+1)-th wireless communication system, M being an integer equal to or greater than 1 and equal to or smaller than (N-1).

2. The computer program as set forth in claim 1, wherein the first to N-th wireless communication systems include at least one of BLE (Bluetooth Low Energy), Wi-Fi Direct, WDS (Wireless Distribution System) and UWB (Ultra-Wide Band).

3. The computer program as set forth in claim 1, wherein the data transmitted/received by the data transmitter/receiver includes a current position of the portable wireless communication apparatus (400).

4. The computer program as set forth in any one of claims 1 to 3, wherein the computer program causes the portable wireless communication apparatus (400) to carry out:
scanning around the portable wireless communication apparatus (400) to thereby detect another portable wireless communication apparatus (400A) existing in a scanned area (S210);
calculating an optimal communication path (300) to the another portable wireless communication apparatus (400A) (S230);
establishing a communication path (300) through which the portable wireless communication apparatus (400) makes communication with the another portable wireless communication apparatus (400A) (S240); and
serially carrying out the scanning, the calculating and the establishing to thereby construct a mesh network (400X) to the another portable wireless communication apparatus (400A).

5. The computer program as set forth in any one of claims 1 to 3, wherein the computer program causes the portable wireless communication apparatus (400) to further carry out updating the communication path (300) to the another portable wireless communication apparatus (400A) for optimization after the mesh network (400X) was constructed (S290).

6. The computer program as set forth in any one of claims 1 to 3, wherein the computer program causes the portable wireless communication apparatus (400) to carry out judging whether data communication is urgent, and preferentially making the data communication if the data communication is judged to be urgent.

7. A cellular (400) phone including:
a data transmitter/receiver (410) for transmitting/receiving data to/from another party in accordance with a wireless communication system selected among a first to N-th wireless communication systems in dependence on a distance between the cellular phone (400) and the another party, N being an integer equal to or greater than 2;
a distance-detecting unit (460) for judging the distance between the cellular phone (400) and the another party; and
a memory (422) for storing first to N-th programs for operating the first to N-th wireless communication systems, respectively,
the memory (422) further storing the computer program as set forth in any one of claims 1 to 6.

8. A data communication system for transmitting/receiving data between portable wireless communication apparatuses (400A), between access points and between a portable wireless communication apparatus (400A) and an access point,
the portable wireless communication apparatus (400A) including:
a data transmitter/receiver (410) for transmitting/receiving data to/from another party (400B) in accordance with a wireless communication system selected among a first to N-th wireless communication systems in dependence on a distance between the portable wireless communication apparatus (400A) and the another party (400B), N being an integer equal to or greater than 2;
a distance-detecting apparatus (460) for judging the distance between the portable wireless communication apparatus (400A) and the another party (400B); and
a memory (422) for storing first to N-th programs for operating the first to N-th wireless communication systems, respectively,
the data communication system selecting a (M+1)-th wireless communication system when the distance detected by the distance-detecting apparatus (460) is greater than a maximum communicable distance of a M-th wireless communication system, but is smaller than a maximum communicable distance of the (M+1)-th wireless communication system, and causing the data transmitter/receiver (410) to transmit/receive data to/from the another party (400B) in accordance with the (M+1)-th wireless communication system, M being an integer equal to or greater than 1 and equal to or smaller than (N-1),
the data communication system:
selecting the (M+1)-th wireless communication system when (a) the distance between the portable wireless communication apparatus (400A) and the another party (400B) is greater than the greatest distance among maximum communicable distances of the first to N-the wireless communication systems, (b) the portable wireless communication apparatus (400A) and the another party (400B) are both within the same access point (500), and (c) the distance between the portable wireless communication apparatus (400A) and the access point (500) is greater than a maximum communicable distance of the M-th wireless communication system, but is smaller than a maximum communicable distance of the (M+1)-th wireless communication system;
causing the data transmitter/receiver (410) to make a first data-communication in accordance with the (M+1)-th wireless communication system between the portable wireless communication apparatus (400A) and the access point (500); and
making a data-communication between the access point (500) and the another party (400B) in the same manner as that of the first data-communication,
the data communication system:
making a data-communication between the portable wireless communication apparatus (400A) and a first access (500A) point in the same manner as that of the first data-communication when the portable wireless communication apparatus (400A) is within the first access point (500A), and the another party (400B) is within a second access point (500B);
making a data-communication between the first access point (500A) and the second access point (500B); and
making a data-communication between the another party (400B) and the second access point (500B) in the same manner as that of the first data-communication,

9. The data communication system as set forth in claim 8, wherein the portable wireless communication apparatus (400A) carries out:
scanning around the portable wireless communication apparatus (400A) to thereby detect another portable wireless communication apparatus (400B) existing in a scanned area (S210);
calculating an optimal communication path (300) to the another portable wireless communication apparatus (400B) (S230);
establishing a communication path (300) through which the portable wireless communication apparatus (400A) makes communication with the another portable wireless communication apparatus (400B) (S240); and
serially carrying out the scanning, the calculating and the establishing to thereby construct a mesh network (400X) to the another portable wireless communication apparatus (400B).

10. The data communication system as set forth in claim 9, wherein the portable wireless communication apparatus (400A) further carries out updating the communication path (300) to the another portable wireless communication apparatus (400B) for optimization after the mesh network (400X) was constructed (S290).

11. The data communication system as set forth in claim 8, wherein the portable wireless communication apparatus (400A) comprises a cellular phone (400).

12. A method of making data-communication between portable wireless communication apparatuses (400A), between access points and between a portable wireless communication apparatus (400A) and an access point,
when a distance between a portable wireless communication apparatus (400A) and another portable wireless communication apparatus (400B) is greater than a maximum communicable distance of a M-th wireless communication system, but is smaller than a maximum communicable distance of the (M+1)-th wireless communication system, M being an integer equal to or greater than 1 and equal to or smaller than (N-1), N being an integer equal to or greater than 2,
the method including:
selecting the (M+1)-th wireless communication system; and
making a data-communication with the another portable wireless communication apparatus (400B) in accordance with the (M+1)-th wireless communication system,
when (a) the distance between the portable wireless communication apparatus (400A) and the another portable wireless communication apparatus (400B) is greater than the greatest distance among maximum communicable distances of the first to N-the wireless communication systems, (b) the portable wireless communication apparatus (400A) and the another portable wireless communication apparatus (400B) are both within the same access point (500), and (c) the distance between the portable wireless communication apparatus (400A) and the access point (500) is greater than a maximum communicable distance of the M-th wireless communication system, but is smaller than a maximum communicable distance of the (M+1)-th wireless communication system,
the method including:
selecting the (M+1)-th wireless communication system;
making a first data-communication in accordance with the (M+1)-th wireless communication system between the portable wireless communication apparatus (400A) and the access point (500); and
making a data-communication between the access point (500) and the another portable wireless communication apparatus (400B) in the same manner as that of the first data-communication;
when the portable wireless communication apparatus (400A) is within a first access point (500A), and the another portable wireless communication apparatus (400B) is within a second access point (500B),
the method including:
making a data-communication between the portable wireless communication apparatus (400A) and a first access point (500A) in the same manner as that of the first data-communication;
making a data-communication between the first access point (500A) and the second access point (500B); and
making a data-communication between the another portable wireless communication apparatus (400B) and the second access point (500B) in the same manner as that of the first data-communication.

13. The method as set forth in claim 12, further including:
scanning around the portable wireless communication apparatus (400) to thereby detect another portable wireless communication apparatus (400A) existing in a scanned area (S210);
calculating an optimal communication path (300) to the another portable wireless communication apparatus (400A) (S230);
establishing a communication path (300) through which the portable wireless communication apparatus (400) makes communication with the another portable wireless communication apparatus (400A) (S240); and
serially carrying out the scanning, the calculating and the establishing to thereby construct a mesh network (400X) to the another portable wireless communication apparatus (400A).

14. The method as set forth in claim 13, further including updating the communication path (300) to the another portable wireless communication apparatus (400A)for optimization after the mesh network (400X) was constructed.

15. The method as set forth in claim 12, further including judging whether data communication is urgent, and preferentially making the data communication if the data communication is judged to be urgent.
